(19) Europäisches Patentamt

European Patent Office

Office européen des brevets

(11) **EP 0 821 796 B1**

(12) **EUROPÄISCHE PATENTSCHRIFT**

(45) Veröffentlichungstag und Bekanntmachung des Hinweises auf die Patenterteilung:
**30.05.2001   Patentblatt 2001/22**

(51) Int Cl.[7]: **G01S 13/75**

(21) Anmeldenummer: **96905742.1**

(22) Anmeldetag: **18.03.1996**

(86) Internationale Anmeldenummer:
**PCT/DE96/00471**

(87) Internationale Veröffentlichungsnummer:
**WO 96/33423 (24.10.1996 Gazette 1996/47)**

(54) **FUNKABFRAGBARER SENSOR IN OBERFLÄCHENWELLENTECHNIK**

RADIO-INTERROGATABLE SENSOR USING SURFACE WAVE TECHNOLOGY

DETECTEUR INTERROGEABLE PAR RADIO, A ONDES DE SURFACE

(84) Benannte Vertragsstaaten:
**DE FR GB**

(30) Priorität: **18.04.1995  DE 19514343**

(43) Veröffentlichungstag der Anmeldung:
**04.02.1998   Patentblatt 1998/06**

(73) Patentinhaber: **SIEMENS AKTIENGESELLSCHAFT**
**80333 München (DE)**

(72) Erfinder:
 • **RUILE, Werner**
   **D-80636 München (DE)**

 • **SCHOLL, Gerd**
   **D-80636 München (DE)**
 • **OSTERTAG, Thomas**
   **D-89075 Ulm (DE)**
 • **REINDL, Leonhard**
   **D-83071 Stephanskirchen (DE)**
 • **MAGORI, Valentin**
   **D-81539 München (DE)**

(56) Entgegenhaltungen:
   EP-A- 0 166 065        WO-A-93/13495
   DE-C- 4 336 504        US-A- 5 289 160

**Beschreibung**

Die Erfindung bezieht sich auf einen funkabfragbaren passiven Sensor.

Für die Erfindung einschlägige Oberflächenwellenanordnungen in Verbindung mit Sensoren sind bekannt aus WO 93/13495, WO/CH93/00252, US-A-3,273,146, US-A-4,725,841, US-A-4,620,191.

In den genannten Druckschriften sind Aufbau und Betriebsweisen verschiedenartiger Oberflächenwellenanordnungen beschrieben, die alle gemeinsam haben, daß mittels eines Interdigitalwandlers aus einem elektrischen Signal in einem piezoelektrischen Substratkörper Oberflächenwellen erzeugt werden, die sich im Regelfall im wesentlichen senkrecht zur interdigitalen Ausrichtung der Wandlerelektroden in der Oberfläche des Substratkörpers ausbreiten. Mit einem zweiten Interdigitalwandler, der auch der bereits voranstehend beschriebene Wandler in Doppelfunktion sein kann, ist es möglich, aus der Oberflächenwelle ein charakteristisch verändertes Hochfrequenzsignal zurückzugewinnen. Wie im Stand der Technik beschrieben, kann eine solche Oberflächenwellenanordnung noch weitere Strukturen wie Reflektorstrukturen, weitere Wandlerstrukturen usw. umfassen, die z.B. auch dispersive Anordnung der Reflektor-/Wandlerfinger, codierte Anordnung der Finger und dgl. aufweisen können.

Wesentlicher Gesichtspunkt und Inhalt der vorliegenden Erfindung ist ein funkabfragbarer, passiver, d.h. keine (galvanische) Stromzuführung erfordernder Sensor in Oberflächenwellentechnik, dem von einem ortsentfernten Hochfrequenzsender ein Hochfrequenzsignal, z.B. ein Burst-Impuls, ein FM-CW-Signal, ein gechirpter Impuls und dgl. zugesandt wird.

Die Oberflächen-wellenanordnung des Sensorteils, d.h. deren Eingangswandlerstruktur ist dazu mit einer Antenne zum Funk-Empfang dieses zugesandten Impulses ausgerüstet. Eine entsprechende Antenne, die mit einer zweiten Wandlerstruktur der Oberflächenwellenanordnung verbunden ist oder im bereits erwähnten Falle einer Wandlerstruktur mit Doppelfunktion dieselbe Antenne ist, wird dazu verwendet, das Impulsantwortsignal der Oberflächenwellenanordnung zurückzusenden, das in einem ortsentfernten Empfänger zu empfangen ist. Das zurückgesandte Impulsantwortsignal ist im Regelfall gegenüber dem von der Oberflächenwellenanordnung empfangenen Signal verschieden, nämlich entsprechend dem zu ermittelnden Stromstärke-Meßwert, und zwar dies durch entsprechende physikalische Einwirkung auf die Oberflächenwellenanordnung.

Funkabfragbare Oberflächenwellenanordnungen werden bereits z.B. in Gebührensystemen an Autostraßen, -tunnels und dgl. benutzt, wo es jedoch auf die Detektierung vorprogrammierter individueller Kodierung des Impulsantwortsignals zur Objekt-Identifizierung ankommt. Auch in der Meßtechnik sind funkabfragbare Oberflächenwellenanordnungen verwendet worden, wobei diese im Regelfall als Verzögerungsleitungen aufgebaut sind und für den Meßzweck Maßnahmen ergriffen sind, daß die zu ermittelnde Meßgröße in der Oberflächenwellenanordnung eine Laufzeitveränderung der akustischen Welle bewirkt. Diese Laufzeitveränderung kann auf einem von einer (quer zur Laufrichtung der Oberflächenwelle gerichteten) elektrischen Feld im Substratkörper beruhen, das z.B. durch piezoelektrischen Effekt im entsprechenden Teilbereich des Substratkörpers Laufzeitveränderung herbeiführt (EP 0166065). Es ist z.B. ein Temperatursensor mit Änderung der Laufzeit der Welle bekannt (EP 0465029). Eine Anordnung, die eine Widerstandsveranderung einer auf der Oberfläche des Substratkörpers der Oberflächenwellenanordnung angebrachten organischen Schicht ausnutzt, eignet sich zur Messung einer Oberflächenbeladung dieser Schicht, z.B. mit einer zu identifizierenden/quantitativ zu messenden chemischen Substanz (Electronics Letters, Band 23 (1987) Nr. 9 S. 446/447). Auch ist ein einschlägiger Druckmesser bekannt, bei dem die im Material des Substratkörpers der Oberflächenwellenanordnung druckabhängig veränderte mechanische Eigenschaft des Körpers, z.B. Biegung, eine Laufzeitveränderung der akustischen Welle bewirkt und zur Meßwertermittlung nutzbar macht (Proceedings IEEE, Band 64 (1976) S. 754-6). Bei den hier letztgenannten Anordnungen ist jedoch ein Fernabfragen per Funk nicht vorgesehen.

Aus der DE 43 36 504 C1 ist eine mit Oberflächenwellen arbeitende Identifizierungsmarke bekannt, die mit einem Funksignal drahtlos fernabgefragt werden kann. Einer der die Codierung des ID-Tag bildenden Reflektoren ist dabei mittels eines Schalters in seiner Reflexion umschaltbar, wobei der Schalter durch einen Sensor betätigt wird. In Abhängigkeit von der durch den Sensor überwachten physikalischen Größe kann dabei das durch den Reflektor gebildete Bit auf 0 oder 1 gesetzt werden.

Es ist eine Aufgabe der vorliegenden Erfindung, für eine funkabfragbare, fernabfragbare Sensoreinrichtung mit Oberflächenwellen eine neue Ausgestaltung anzugeben.

Eine solche Aufgabe wird gemäß Patentanspruch 1 gelöst mit einer Anordnung, die aufweist:

eine Oberflächenwellenanordnung mit Oberflächenwellenstrukturen und (wenigstens) einer Antenne,

(wenigstens) ein sensitives Impedanz-Element als Sensorteil, einen Hochfrequenz-Sender und -Empfänger mit Sende- und Empfangsantenne und elektronischer Auswerteeinrichtung,

wobei das Impedanz-Element, das der vom Sensorteil zu erfassenden Einwirkung auszusetzen ist, mit einer Oberflächenwellenstruktur elektrisch verbunden ist, und der Sender zur Funk-Aussendung eines Abfrageimpulses und der Empfänger mit seiner Auswerteeinrichtung zum Funk-Empfang und zur qualitativen/quantitativen Auswertung der von der Einwirkung beeinflussten Änderung der Impulsantwort der Oberflächenwellenanordnung dient.

Das Impedanz-Element kann ein Reaktanz-Element (z.B. ein magnetfeld-abhängiges Element) sein, das mit wenigstens einer der Oberflächenwellenstrukturen der Oberflächenwellenanordnung elektrisch verbunden ist. Das Impedanz-Element muß geeignet sein, sein elektrisches Impedanzverhalten abhängig von der mit dem Sensor zu detektierenden Einwirkung zu ändern.

Weitere Erläuterungen der Erfindung werden anhand der beigefügten Figuren gegeben.

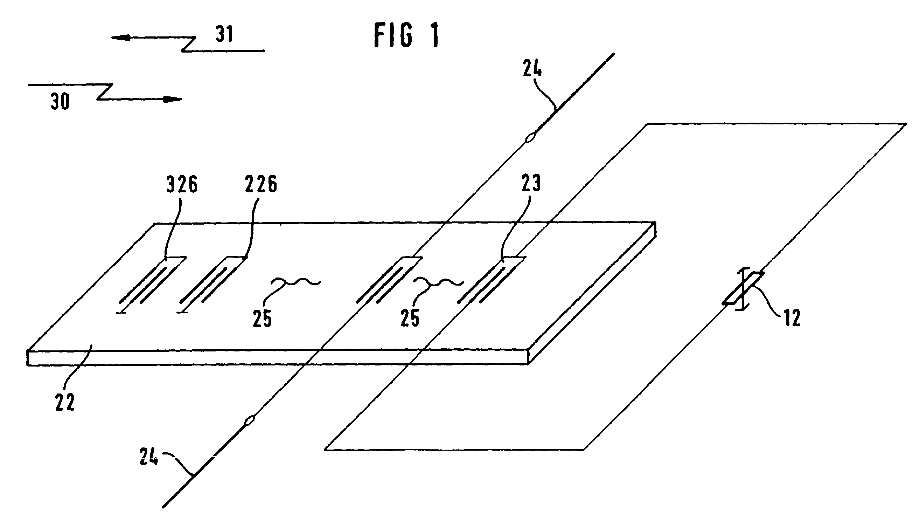

Figuren 1, 2 und 3 zeigen Ausführungsformen der Oberflächen-wellenanordnung für einen erfindungsgemäßen Sensor, jeweils mit angeschlossenem Impedanz-Element.

Die jeweilige Oberflächenwellenanordnung 21 hat bei den dargestellten Beispielen der Figuren 1 bis 3 eine sehr einfache Ausgestaltung, an der jedoch das Wesentliche der Wirkungsweise einer bei der Erfindung verwendeten Oberflächenwellenanordnung erläutert werden kann. Mit 22 ist der bekanntermaßen piezoelektrische Körper der Oberflächenwellenanordnung 21 bezeichnet. Auf der einen Oberfläche dieses Körpers 22 ist eine interdigitale Wandlerstruktur 23 in bekannter Weise angeordnet. Mit 24 ist die aus zwei Dipolhälften bestehende Antenne bezeichnet. Es können aber auch andere einschlägige Antennenstrukturen, wie z.B. eine Patch-Antenne, Schleifenantenne oder dergleichen, vorgesehen sein. Ein hochfrequentes Abfragesignal 30 wird von dieser Antenne 24 aufgenommen und die zwischen den beiden Dipolhälften auftretende elektrische Hochfrequenzspannung speist die beiden interdigitalen Fingerstrukturen des Wandlers 23. Die mit dem Wandler 23 als Eingangswandler erzeugte Oberflächenwelle 25 läuft auf/in der Oberfläche des Substratkörpers 22. Eine solche Welle ist mit 25 schematisch angedeutet. Sie gelangt auf ihrem Weg auch in den Wirkungsbereich der Struktur 26, die aufgrund ihrer Finger als Reflektor für die Welle 25 wirksam ist. Da die Struktur 26 jedoch (ebenfalls) als interdigitale Fingerstruktur ausgeführt ist und an deren beide Interdigitalstrukturen das Impedanz-Element 12, wie aus den Figuren ersichtlich, elektrisch angeschlossen ist, wird in der Struktur 26 vermöge der akustischen Oberflächenwelle zusätzlich auch eine elektrische Hochfrequenz-spannung erzeugt, zu der das Element 12 als elektrischer Abschlußwiderstand wirksam ist. Da von der Amplitude der Einwirkung abhängig der elektrische Widerstand des Elementes 12 sich ändert, wirkt sich dies als Änderung des elektrischen (komplexen) Abschlußwiderstandes der Struktur 26 aus. Es bildet sich eine Beeinflussung aus, die unterschiedlich (im Extremfall) zwischen sehr hochohmigem Abschlußwiderstand und nahezu Kurzschluß-Abschlußwiderstand liegt, und zwar abhängig von der Amplitude. Durch passend gewählte Dimensionierung der elektrischen Werte des Elementes 12 kann ein jeweils günstiger Meßgröße-Bereich des vom Element 12 bewirkten Abschlußwiderstandes eingestellt werden. Das Impulsantwortsignal ist mit 31 bezeichnet.

Mit anderen Worten, wirkt das Element 12 also als elektrische Abschlußimpedanz, worin das neue Merkmal der Erfindung liegt.

In der bekannten P-Matrix-Darstellung eines Wandlers läßt sich die Reflexion dieses Wandlers als Funktion seines elektrischen Abschlusses folgendermaßen darstellen:

$$ P_{11}(Y_{Last}) = P_{11}(SC) + 2 \cdot \frac{P_{13}^2}{(P_{33} + Y_{Last})} $$

worin $P_{11}(SC)$ der Kurzschluß-Reflexionsfaktor, $P_{13}$ die elektroakustische Konversion, $P_{33}$ die Wandleradmittanz und $Y_{Last}$ die Abschlußadmittanz sind.

Es ist zweckmäßig, (jeweils) eine schmalbandige Antenne vorzusehen, um die Einrichtung gegen sonstige elektromagnetische Störungen zu schützen.

Die Figur 1 zeigt eine spezielle Oberflächenwellenanordnung mit einem Substratplättchen 22 und darauf vorhandenen Oberflächenwellenstrukturen. Mit 23 ist der Eingangs/Ausgangswandler bezeichnet, an den die Dipolhälften der Antenne 24 zum Funkempfang und Funk-Rücksendung angeschlossen sind. Der mit dem Impedanz-Element 12 verbundene, als Oberflächenwellenreflektor dienende Wandler 26 ist auf dem Plättchen 22 auf der einen Seite des Wandlers 23 angeordnet.

Auf der dazu anderen Seite der Oberfläche des Plättchens 22 sind in Figur 1 z. B. zwei Referenz-Reflektoren 226 und 326 vorgesehen, die dazu dienen, zusätzlich zur Messung der Einwirkung durch das Sensorelement 12 auch die Distanz zwischen dem Sender/ Empfänger und dem Sensorelement 12 des Sensors und auch die Temperatur des Sensorelements zu bestimmen. Zum Beispiel kann sich ständig die Entfernung zwischen Oberflächenwellen-Bauteil und seinem als Sende-/Empfangsstation aufgebautem Anteil ändern. Für die Distanzmessung und die Temperaturmessung ist dabei davon ausgegangen, daß sich das eigentliche Sensorelement 12 ebenfalls auf dem Plättchen befindet oder diesem gegenüber in definiertem geringem Abstand positioniert ist. Mit der Bestimmung der Distanz(-änderungen) und der Temperatur des Sensorelements können beispielsweise mögliche bekannte Querempfindlichkeiten des Sensorsignals in der Signalverarbeitung eliminiert werden.

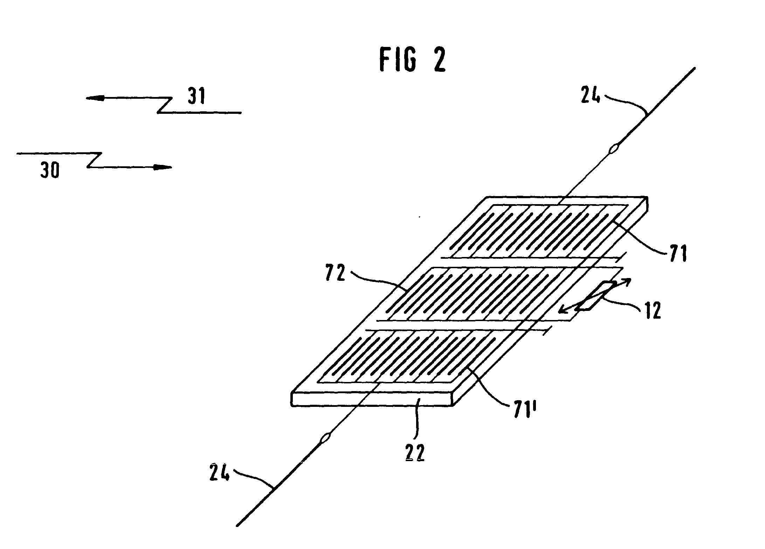

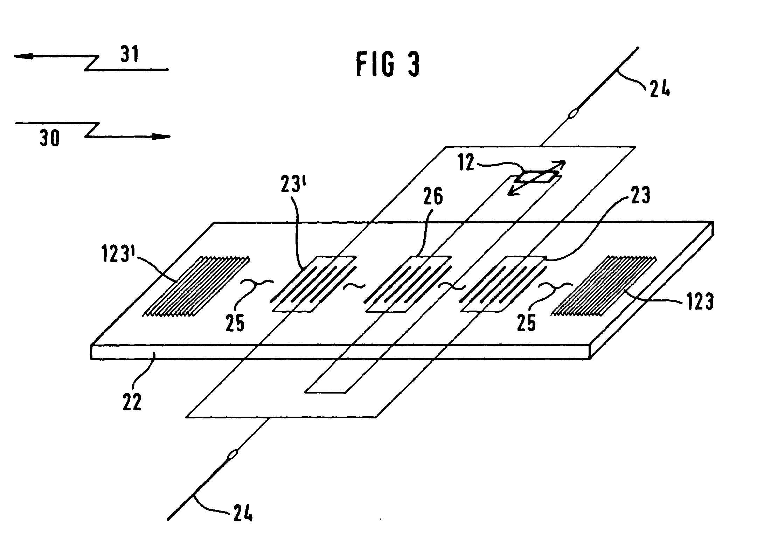

Weitere für die Erfindung geeignete Bereiche von Oberflächenwellenanord-nungen zeigen die Figuren 2 und 3. Die Figur 2 zeigt eine Anordnung mit moden-gekoppelten Wandlern. Die mit 71 und 71' bezeichneten Wandler auf dem Substratplättchen 22 sind Eingangs-/Ausgangswandler mit ihren Dipolhälften der Antenne 24. Der Wandler 72 ist ebenfalls eine Oberflächenwellenstruktur, die mit den Wandlern 71, 71' moden-gekoppelt ist. Dieser moden-gekoppelte Wandler 72 ist mit dem Impedanz-Element 12 verbunden und die Änderung seiner Abschlußimpedanz, d.h. die Änderung des Elements 12 im Magnetfeld, ist die wie bei den vorangehend beschriebenen Beispielen auszuwertende Meßgröße.

Figur 3 zeigt eine Oberflächenwellen-Resonatoranordnung. Diese umfaßt auf dem Substrat 22 die Eingangs/Ausgangswandler 23, 23' und den Wandler 26, der mit dem Impedanz-Element wie gehabt verbunden ist. Mit 123 und 123' sind Reflektorstrukturen bezeichnet, an denen die in der Substratoberfläche verlaufende akustische Welle in sich wieder zurückreflektiert wird, so daß diese Reflektoren wie Spiegel eines Resonators wirksam sind.

Die Einwirkung des Sensorelements 12 auf das Antwort-Verhalten der Oberflächenstruktur äußert sich in bzw. ist meßbar als Änderung des Impulsantwortsignals in Betrag und/oder Phase desselben gegenüber dem Abfragesignal.

Eine Eichung/Kalibrierung eines erfindungsgemäßen Sensors erfolgt in an sich bekannter Weise, wie sie vielfach zur Eichung von quantitativ messenden Sensoren/Meßeinrichtungen Anwendung findet.

Die Oberflächenwellenanordnung kann auch als zusätzlicher Oberflächenwellen-Chip dem impedanzgebundenen Sensor 12 hybrid hinzuintegriert sein. Der Sensor 12 kann z.B. ein auf einem größeren Trägersubstrat angeordnetes Widerstandselement sein, auf dem außerdem noch eine piezoelektrische Schicht, z.B. aus Zinkoxid, als Substratschicht 22 für die Oberflächenwellenanordnung aufgebracht ist. Das Sensorelement kann z.B. ein Halbleiterbauteil auf/in einem Siliziumsubstrat sein.

Als Impedanzen (12) können sowohl resistive wie auch kapazitive und induktive Widerstände allein oder kombiniert in Frage kommen. Es können dies sein, z.B. Fotowiderstände, Feldplatten, temperaturabhängige Widerstände, Kohlemikrophone und dergl. und/oder Kapazitätsdioden, kapazititve Positions/Wegsensoren, Feuchtesensoren sowie induktive Elemente, wie eine Spule, ein Wegaufnehmer/Positionsgeber und dergl.

**Patentansprüche**

1. Sensoranordnung
   mit einer Oberflächenwellenanordnung (21) mit Oberflächenwellenstrukturen (23,26) und einer Antenne (24),

   - mit einem sensitiven Impedanz-Element (12) als Sensorteil,
   - mit einem Hochfrequenz-Sender und -Empfänger (30,31) mit Funkantenne und elektronischer Auswerteeinrichtung,

   wobei der Sender zur Funkaussendung eines Abfrageimpulses (30) und der Empfänger mit seiner Auswerteeinrichtung zum Funkempfang und zur qualitativen Auswertung der von der Einwirkung auf das Impedanz-Element beeinflussten Änderung der Impulsantwort (31) der Oberflächenwellenanordnung ausgebildet sind,
   **dadurch gekennzeichnet**, daß das Impedanz-Element (12), das der vom Sensorteil zu erfassenden Einwirkung auszusetzen ist, mit wenigstens einer der Oberflächenwellenstrukturen (26) elektrisch verbunden ist, und daß die Auswertung quantitativ erfolgen kann.

2. Sensoranordnung nach Anspruch 1,
   bei dem das sensitive Element ein resistives Element ist.

3. Sensoranordnung nach Anspruch 2,
   bei dem das resistive Element eine Feldplatte ist.

4. Sensoranordnung nach Anspruch 2,
   bei dem das resistive Element ein Fotowiderstand ist.

5. Sensoranordnung nach Anspruch 1, bei dem das sensitive Element eine Kapazitätsdiode ist.

6. Sensoranordnung nach Anspruch 1,
   bei dem das sensitive Element eine Spule, in einem Magnetfeld anzuordnen, ist.

7. Sensoranordnung nach einem der Ansprüche 1 bis 6,
   bei dem die Oberflächenwellenanordnung (21) ein Oberflächenwellen-Resonatorfilter ist.

8. Sensoranordnung nach einem der Ansprüche 1 bis 6,
   bei dem die Oberflächenwellenanordnung (21) eine Laufzeitleitung ist.

9. Sensoranordnung nach einem der Ansprüche 1 bis 6,
   bei dem die Oberflächenwellenanordnung eine modengekoppelte Anordnung ist.

**Claims**

1. Sensor arrangement

   - having a surface-wave arrangement (21) with surface-wave structures (23, 26) and an antenna (24),
   - having a sensitive impedance element (12) as sensor part,
   - having a radiofrequency transmitter and receiver (30, 31) with radio antenna and electronic evaluation device,

the transmitter being designed for radio transmission of an interrogation pulse (30) and the receiver with its evaluation device being designed for radio reception and for qualitative evaluation of the change, influenced by the effect on the impedance element, in the impulse response (31) of the surface-wave arrangement,

- the impedance element (12), which is to be exposed to the effect to be detected by the sensor part, characterized in that electrically connected to at least one of the surface-wave structures (26), and in that the evaluation can take place quantitatively

2. Sensor arrangement according to Claim 1, in which the sensitive element is a resistive element.

3. Sensor arrangement according to Claim 2, in which the resistive element is a magnetoresistor.

4. Sensor arrangement according to Claim 2, in which the resistive element is a photoresistor.

5. Sensor arrangement according to Claim 1, in which the sensitive element is a variable-capacitance diode.

6. Sensor arrangement according to Claim 1, in which the sensitive element is a coil to be arranged in a magnetic field.

7. Sensor arrangement according to one of Claims 1 to 6, in which the surface-wave arrangement (21) is a surface-wave resonator filter.

8. Sensor arrangement according to one of Claims 1 to 6, in which the surface-wave arrangement (21) is a delay line.

9. Sensor arrangement according to one of Claims 1 to 6, in which the surface-wave arrangement is a mode-coupled arrangement.

**Revendications**

1. Dispositif détecteur

- avec un dispositif à ondes de surface (21) avec des structures à ondes de surface (23, 26) et une antenne (24),
- avec un élément sensible d'impédance (12) comme partie détecteur,
- avec un émetteur et un récepteur haute fréquence (30, 31) avec antenne radio et dispositif électronique d'analyse,

l'émetteur étant conçu pour l'émission par radio d'une impulsion d'interrogation (30) et le récepteur avec son dispositif d'analyse étant conçu pour la réception par radio et pour l'analyse qualitative de la variation, influencée par l'opération effectuée sur l'élément d'impédance, de la réponse par impulsion (31) du dispositif à ondes de surface **caractérisé par le fait**

que l'élément d'impédance (12), qu'il faut soumettre à l'opération effectuée que l'on veut saisir par la partie détecteur, est relié à au moins l'une des structures (26) à ondes de surface et que l'analyse peut être faite d'une façon quantitative.

2. Dispositif détecteur selon la revendication 1 dans lequel l'élément sensible est un élément résistif.

3. Dispositif détecteur selon la revendication 2 dans lequel l'élément sensible est une magnéto-résistance.

4. Dispositif détecteur selon la revendication 2 dans lequel l'élément résistif est un photo-conducteur.

5. Dispositif détecteur selon la revendication 1 dans lequel l'élément sensible est une diode à capacité variable.

6. Dispositif détecteur selon la revendication 1 dans lequel l'élément sensible est une bobine qu'il faut disposer dans un champ magnétique.

7. Dispositif détecteur selon l'une des revendications 1 à 6 dans lequel le dispositif à ondes de surface (21) est un filtre à résonateur à ondes de surface.

8. Dispositif détecteur selon l'une des revendications 1 à 6 dans lequel le dispositif à ondes de surface (21) est une ligne à retard.

9. Dispositif détecteur selon l'une des revendications 1 à 6 dans lequel le dispositif à ondes de surface est un dispositif à couplage de modes.

FIG 1

EP 0 821 796 B1

FIG 2

FIG 3

EP 0 821 796 B1